# FASCICULE DE BREVET EUROPEEN

(11) **EP 3 551 500 B1**
(45) Date de publication et mention de la délivrance du brevet: **02.12.2020**
(21) Numéro de dépôt: 17828944.3
(22) Date de dépôt: 08.12.2017
(51) Int. Cl.: B60R 9/048, B60R 9/058

(54) **DISPOSITIF DE FIXATION, ACCESSOIRE DE PORTAGE ET TENTE DE TOIT COMPORTANT UN TEL DISPOSITIF**
BEFESTIGUNGSVORRICHTUNG, STÜTZZUBEHÖR UND DACHZELT MIT SOLCH EINER VORRICHTUNG
ATTACHMENT DEVICE, SUPPORTING ACCESSORY AND ROOF TENT INCLUDING SUCH A DEVICE

(30) Priorité: 09.12.2016 FR 1662235
(43) Date de publication de la demande: 16.10.2019
(73) Titulaire: Brochier, Patrice, 30360 Saint Etienne de l'Olm (FR)
(72) Inventeur: Brochier, Patrice, 30360 Saint Etienne de l'Olm (FR)
(74) Mandataire: Cornuejols, Georges
(86) Numéro de dépôt international: PCT/FR2017/053475
(87) Numéro de publication internationale: WO 2018/104684

(56) Documents cités:
- EP-A2- 2 308 721
- WO-A1-94/21490
- WO-A1-2009/115699
- WO-A1-2011/102780

## Description

### DOMAINE TECHNIQUE DE L'INVENTION

La présente invention vise un dispositif de fixation, un accessoire de portage et une tente de toit comportant un tel dispositif. Elle s'applique, notamment, au domaine de la fixation de coffres et d'accessoires à un toit d'un véhicule comportant des barres de toit, tels qu'une tente de toit ou une galerie par exemple.

### ETAT DE LA TECHNIQUE

Il existe actuellement différents systèmes pour fixer, sur les barres de toit de véhicules, un accessoire de portage tel qu'un coffre de toit, une tente de toit pour automobile ou une galerie.

Pour fixer un accessoire du type coffre de toit, il existe des systèmes rapides et antivol tels que le brevet FR2836432 accessibles uniquement par l'intérieur du coffre de toit. Cependant l'accès impose que l'utilisateur puisse atteindre le système qui est en hauteur sur le véhicule et de surcroît à l'intérieur du coffre, ce qui est difficile dans le cas de véhicules hauts. De plus, le système encombre l'intérieur du coffre, gênant le chargement, et dans le cas d'une tente de toit, où le plancher doit être absolument plat pour pouvoir recevoir le couchage, il n'est pas possible d'utiliser ce système. Enfin, le système est limité quant à la largeur des barres sur lesquelles il est fixé, ce qui actuellement peut poser problèmes avec certaines barres en forme d'aile, très larges.

Il existe d'autres systèmes, utilisés notamment pour fixer des barres transversales sur des barres longitudinales, tels que la demande de brevet EP0894672, mais qui sont difficilement transposables à l'utilisation dans le cas de coffres de toit ou galerie sur barres transversales, car l'accès serait difficile puisqu'entre le pavillon du véhicule et le coffre ou la galerie. De plus, ces systèmes n'ont pas une plage d'utilisation suffisante pour serrer aussi bien des barres fines que très larges. Enfin, ces systèmes comprennent un grand nombre de pièces, qui ont un impact sur le coût de fabrication.

Un autre système de ce type est celui décrit dans la demande de brevet WO 94/21490 qui utilise un système de coin pour le serrage à toutes les positions. Dans ce dispositif connu, une vis dans l'axe du canal de la barre (ou rail) serre deux mâchoires identiques. La face externe des mâchoires est inclinée à environ 60° et comporte un alésage pour la vis à six pans creux. Un coin à 60° est taraudé pour recevoir la vis et sert d'écrou au système Un ressort de compression entre les mâchoires permet de pré-contraindre le système de blocage avec une force faible qui permet de déplacer le système en appuyant sur le coin.

Ce système comporte quelques inconvénients tels que l'effet de coin qui est fonction de la vis de serrage et de la pente du coin il y a une contradiction entre l'effort de serrage des mâchoires et l'effort de blocage des coins. Selon la pente du coin, l'un des deux efforts augmentera et l'autre diminuera, alors que les deux sont aussi importants. Par ailleurs, si la vis casse, il n'y a plus de fonction d'attache, ce qui peut être dangereux pour la sécurité du chargement. Enfin, la vis est guidée par le filetage qui se déplace avec l'effet de coin radialement et elle est déjà guidée par sa tête qui est dans l'alésage de l'autre mâchoire, donc double guidage exposant la vis à des contraintes mécaniques supplémentaires, ce qu'il faut éviter car il y a un risque de rupture de la vis.

Il existe aussi les systèmes très classiques de fixations par brides, de formes variées, dont la manipulation est peu aisée car il faut visser les écrous ou les vis à l'endroit où le chargement repose sur la barre, en général entre le pavillon du véhicule et le chargement, endroits peu accessibles et avec peu de place pour les manipulations nécessaires. De plus, la hauteur des barres par rapport au pavillon étant fort variable d'un véhicule à l'autre, il n'est pas rare que des vis soient trop près du pavillon voire le touchent et rendent le système inutilisable. Enfin, ces systèmes ne sont pas antivols.

Il existe également, la demande de brevet WO 2009/115699 qui comporte deux mâchoires, chacune composée d'un corps de guidage inséré dans un rail et d'un mors. Chaque corps de guidage comporte une noix taraudée dans laquelle est insérée une tige filetée comportant deux filetages de sens opposés, le vissage de la tige resserrant les mâchoires. Une fois les mâchoires serrées, un arcboutement des corps de guidage a lieu. Cependant, ce dispositif est encombrant en raison de l'espace nécessaire pour fixer le rail à l'accessoire de portage. De plus, la solution mise en œuvre est onéreuse en raison de la tige filetée selon deux pas opposés, de la noix taraudée, et finalement, ce dispositif est fragile en raison des contraintes mises en œuvre sur les pièces. Enfin, ce dispositif créé des chocs sur les rivets de fixation qui peuvent être présents sur un rail.

### OBJET DE L'INVENTION

La présente invention vise à remédier à tout ou partie de ces inconvénients.

A cet effet, selon un premier aspect, la présente invention vise un dispositif de fixation sur barres comportant :
- un rail à section globalement rectangulaire en forme de C présentant un plan de symétrie,
- une vis définissant un premier axe parallèle à l'axe du rail et
- au moins deux mâchoires, chaque mâchoire comportant :
   - une partie corps de guidage circulant dans le rail avec un jeu et comportant une ouverture traversante et
   - une partie mors extérieure au rail ;
dans lequel :
- la tête de la vis est insérée dans l'ouverture traversante d'une mâchoire,
- une autre mâchoire comporte un écrou dans son ouverture traversante, bloqué en rotation autour du premier axe,
- les mors de chaque mâchoire étant désaxés par rapport au plan de symétrie du rail, chacun d'un côté du plan, en serrant la barre en cisaille,
- le vissage de la vis dans l'écrou rapprochant les mâchoires par une translation dans le rail du corps de guidage, la mise en butée du mors de chaque mâchoire sur la barre entraîne une rotation du corps de guidage provoquant le coincement selon un arcboutement du corps de guidage sur au moins deux côtés adjacents du rail.

Grâce à ces dispositions le dispositif se déplace aisément à l'endroit nécessaire, suivant l'écartement des barres de toit, enserre les barres de toutes largeurs, s'autocentre et s'auto-bloque des deux côtés de la barre en la serrant fortement sans que cela ne demande d'effort important de la part de l'utilisateur, reste bloqué en cas de rupture de la tige, se manipule de l'extérieur (n'encombre pas l'intérieur d'un coffre de toit ou le plancher d'une tente de toit), est antivol, est facile d'accès, est facile à desserrer, comporte peu de pièces, simples et peu coûteuses à produire.

De plus, les pièces mises en œuvre dans la présente invention permettent de faciliter le montage du dispositif et de minimiser le coût de fabrication du dispositif. En effet, l'utilisation d'une vis a filetage unique et d'un écrou permet d'utiliser des éléments standardisés et donc moins chers.

Egalement, les corps de guidage de chaque mâchoire se retrouvent en arcboutement sur deux côtés adjacents du rail, ce qui permet de rendre le dispositif plus fiable en cas de choc ou d'aspérités dans la route.

Dans des modes de réalisation, chaque mors forme un angle aigu avec le premier axe, les mors sont inclinés l'un vers l'autre.

Ces modes de réalisation permettent d'entrer en contact plus rapidement avec la barre. De plus, grâce à ces modes de réalisation, les mors enserrent entièrement la barre et évitent une libération de la barre due à des vibrations du véhicule sur la route, par exemple.

Dans des modes de réalisation, chaque mors présente un épaulement d'appui du mors contre la barre après arcboutement.

L'avantage de ces modes de réalisation est de permettre un contact entre la barre et le mors même si le mors subit une faible rotation due à l'arcboutement du corps de guidage dans le rail. Cet arcboutement en combinaison avec l'épaulement et le désaxage des mâchoires permet donc de resserrer chaque mors contre la barre.

Dans des modes de réalisation, l'ouverture de chaque mâchoire présente une forme au moins partiellement ovoïde permettant la rotation de la tête de vis ou de l'écrou lors des arcboutements.

Grâce à ces dispositions, lors de l'arcboutement des corps de guidage, la tête de vis et l'écrou peuvent rester selon le premier axe. Ainsi, ils ne sont pas abimés par l'arcboutement. De plus, la tige de la vis ne subit pas d'efforts dus à une torsion au niveau de la tête de vis et de l'écrou.

Dans des modes de réalisation, une rondelle est mise en place sur la vis proche de la tête de vis, la tête de vis et la rondelle étant emmanchées dans l'ouverture d'une mâchoire.

Ces modes de réalisation permettent de s'assurer que la tête de vis soit bloquée dans l'ouverture traversante de façon peut onéreuse. Et, la rondelle évite d'abimer l'ouverture du corps de guidage par compression, c'est-à-dire que la rondelle évite de mater le métal composant le corps de guidage.

Dans des modes de réalisation, le corps de guidage de chaque mâchoire comporte une rainure sur une surface opposée aux mors.

L'avantage de ces modes de réalisation est de faciliter le passage du corps de guidage au regard des rivets situés sur la face opposée aux mors.

Dans des modes de réalisation, la vis est reliée à une tige filetée par un manchon comportant un frein de filet pour coller le manchon à la vis et à la tige filetée.

Ces modes de réalisation permettent d'éviter une rupture de la vis en favorisant la rupture du frein de filet dans le manchon en cas de blocage du dispositif si celui-ci est totalement bloqué. Le dévissage de la vis rompt le frein de filet et permet de libérer le dispositif objet de la présente invention.

Dans des modes de réalisation, l'ouverture comportant la tête de vis présente une forme conique liant l'ouverture à un bord du corps de guidage.

Grâce à ces dispositions, l'outil utilisé s'insérant dans la tête de vis, pour resserrer les corps de guidage, est guidé automatiquement vers le relief correspondant dans la tête de vis ce qui facilite le serrage ou le desserrage pour l'utilisateur.

Dans des modes de réalisation, la tête de la vis présente une forme asymétrique.

Ces modes de réalisation permettent de créer une clé peu reproductible pour que le dispositif ne soit pas enlevé par n'importe qui, notamment par des personnes mal intentionnées.

Selon un deuxième aspect, la présente invention vise un accessoire de portage pour un véhicule comportant des barres de toit comportant au moins un dispositif objet de la présente invention.

Selon un troisième aspect, la présente invention vise une tente de toit pour véhicule comportant des barres de toit, la tente comportant au moins un dispositif objet de la présente invention.

Les buts, avantages et caractéristiques particulières de l'accessoire de portage et de la tente de toit objets de la présente invention étant similaires à ceux du dispositif objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du dispositif, de l'accessoire de portage et de la tente de toit, objets de la présente invention, en regard des dessins annexés, dans lesquels :
- la figure 1 représente, schématiquement et en perspective, un premier mode de réalisation particulier du dispositif objet de la présente invention en position non fixée sur une barre,
- la figure 2 représente, schématiquement et en vue de côté, le premier mode de réalisation particulier du dispositif objet de la présente invention en position non fixée sur une barre,
- la figure 3 représente, schématiquement et en vue de face, le premier mode de réalisation particulier du dispositif objet de la présente invention en position non fixée sur une barre,
- la figure 4 représente, schématiquement et en perspective, le premier mode de réalisation particulier du dispositif objet de la présente invention en position fixée sur une barre,
- la figure 5 représente, schématiquement et en vue de côté, le premier mode de réalisation particulier du dispositif objet de la présente invention en position fixée sur une barre,
- la figure 6 représente, schématiquement et en vue de face, le premier mode de réalisation particulier du dispositif objet de la présente invention en position fixée sur une barre et
- la figure 7 représente, schématiquement et en vue de côté, un premier mode de réalisation d'une tente de toit comportant un dispositif objet de la présente invention, la tente de toit étant montée sur un véhicule.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en œuvre indépendamment d'autres paramètres dudit exemple de réalisation.

On note dès à présent que les figures ne sont pas à l'échelle.

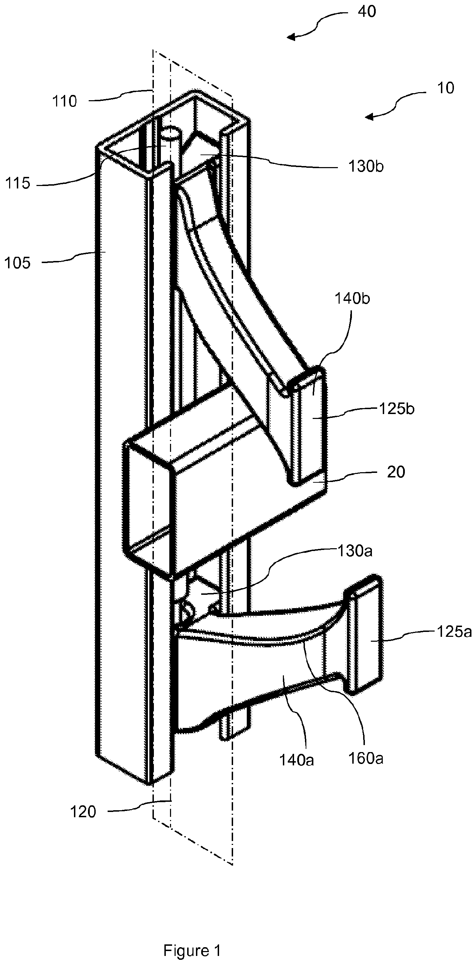

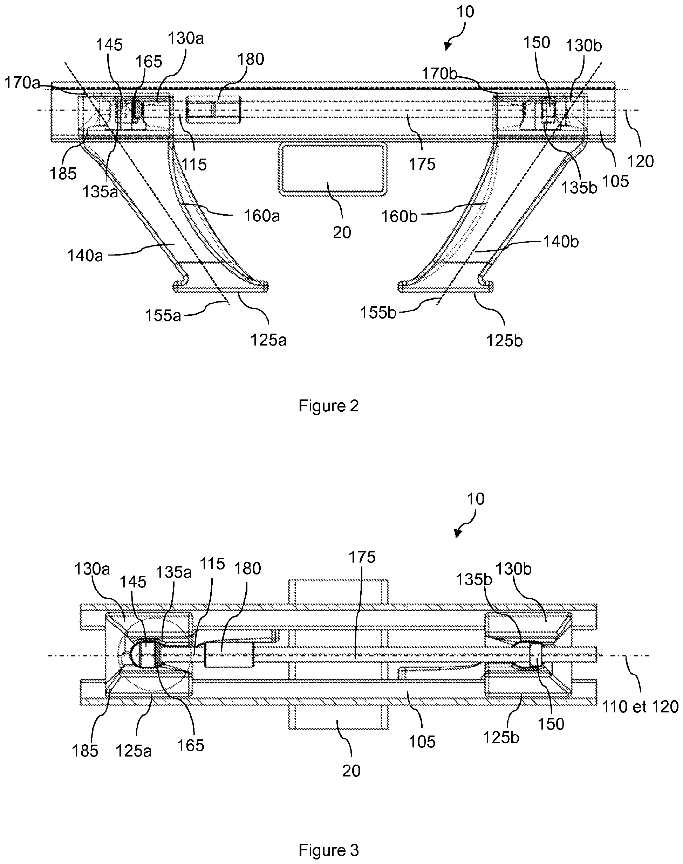

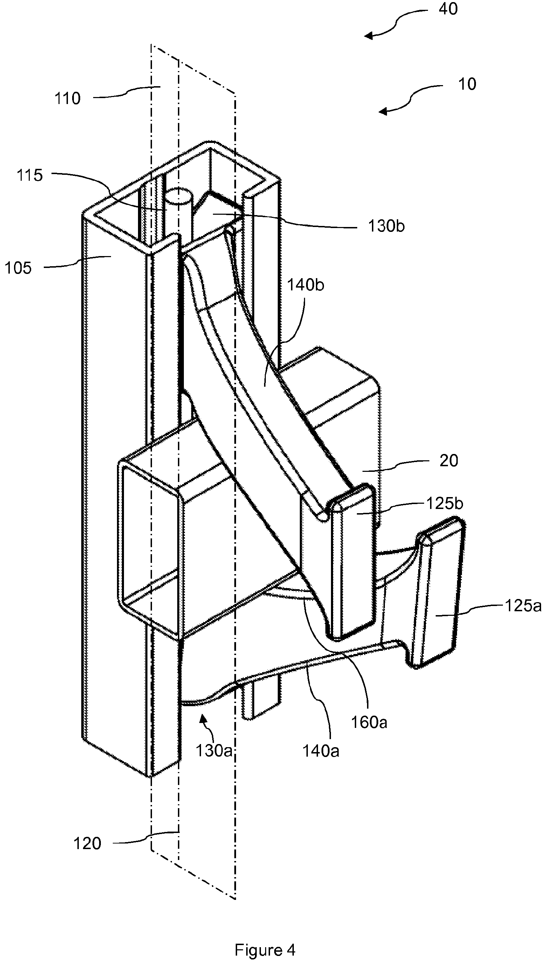

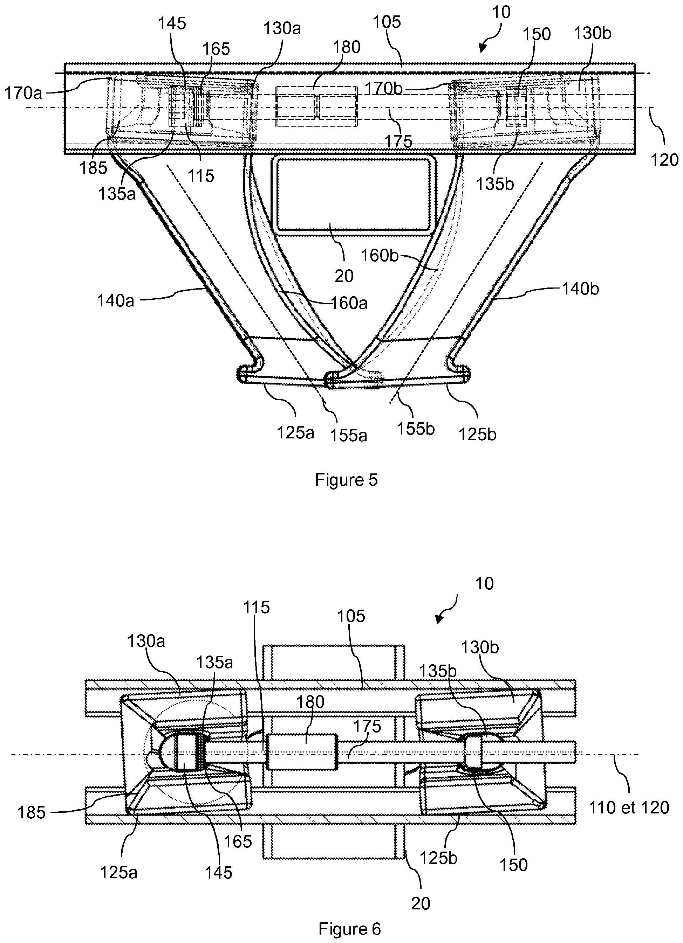

On observe, sur les figures 1 à 6, qui ne sont pas à l'échelle, une vue schématique d'un mode de réalisation du dispositif 10 objet de la présente invention.

Le dispositif 10 de fixation sur barres 20 comporte un rail 105 à section globalement rectangulaire en forme de C présentant un plan de symétrie 110. La section du rail 105 est globalement rectangulaire et ouverte sur l'un des longs côtés du rectangle. Le plan de symétrie 110 est parallèle aux petits côtés du rectangle et passe par les milieux des grands côtés du rectangle définissant la section du rail 105. L'ouverture est configurée pour correspondre à une épaisseur de chaque mors.

Le rail 105 est longitudinal de longueur supérieure à l'écartement entre plusieurs barres 20, d'un véhicule 40, par exemple. La section du rail 105 est invariable sur la longueur du rail 105. Le rectangle présente une épaisseur constante sur l'intégralité de la forme de C. Les coins du rectangle peuvent être arrondis. Le rail 105 présente donc un intérieur creux.

Le rail 105 définit un axe suivant la longueur du rail 105. L'axe ainsi définit passe par l'ensemble des centres de gravité des sections transversales, globalement rectangulaires en forme de C, du rail 105.

Dans des modes de réalisation, le rail 105 peut comporter une rainure, sur le côté du rectangle opposé à l'ouverture. La rainure correspond à un emplacement pour des rivets pour fixer un accessoire de portage, tel une tente de toit, un coffre de toit ou une galerie, par exemple, au rail 105. Les rivets placés dans la rainure ne sont donc ainsi pas abîmés lors du déplacement d'une mâchoire.

Le rail peut être en acier inoxydable ou en aluminium.

Le dispositif 10 comporte une vis 115 définissant un premier axe 120 parallèle à l'axe du rail 105. L'axe 120 est préférentiellement compris dans le plan de symétrie 110 du rail 105 de telle sorte que des mâchoires se déplaçant dans le rail sont sensiblement à égale distance de chaque petit côté du rail 105.

La vis 115 est une vis à tête cylindrique creuse. Préférentiellement, la forme de l'empreinte de la tête de vis 145 est de forme asymétrique. On rappelle ici que l'empreinte d'une tête de vis 145 est la forme de la cavité permettant de mettre en rotation la vis dans le cas de vis à tête creuse. Par exemple, l'empreinte d'une vis cylindrique a tête hexagonale creuse (connue sous le nom de vis CHC) est un hexagone. Ces modes de réalisation permettent de garantir à un utilisateur que le dispositif de fixation ne peut être démonté par une personne mal intentionnée ayant des outils communs. Dans ces modes de réalisation, la tête de la vis présente une forme asymétrique et peut être actionné uniquement par un outil de forme correspondante.

Un écrou 150 est placé à l'extrémité de la vis. L'écrou 150 est un écrou carré, par exemple.

Dans des modes de réalisation, la vis 115 est reliée à une tige filetée 175 par un manchon 180 comportant un frein de filet pour coller le manchon 180 à la vis 115 et à la tige filetée 175. La tige filetée 175 est de même diamètre que la tige de la vis 115 et que le diamètre nominal du manchon 180. Dans ces modes de réalisation, l'écrou 150 est placé sur la tige filetée 175.

Le dispositif 10 comporte également, au moins deux mâchoires, 125a et 125b, chaque mâchoire, 125a et 125b, comportant :
- une partie corps de guidage, 130a ou 130b, circulant dans le rail 105 avec un jeu et comportant une ouverture traversante, 135a ou 135b, et
- une partie mors, 140a ou 140b, extérieure au rail 105.

Dans la description qui suit, les mâchoires, 125a et 125b, seront décrites sans différentiation puisque les mâchoires, 125a et 125b, sont identiques. Cependant, la disposition de chaque mâchoire, 125a et 125b, par rapport au dispositif diffère. Ainsi, les lettres « a » et « b » de l'intégralité des éléments des mâchoires est omise sauf lorsqu'une différence apparait entre les dispositions des mâchoires, 125a et 125b.

Le corps de guidage 130 d'une mâchoire 125 est globalement parallélépipédique, les dimensions du parallélépipède correspondent aux dimensions de l'intérieur du rail avec un jeu. Le corps de guidage 130 présente une face en regard de l'ouverture de la section du rail 105 sur laquelle est fixée le mors 140. Le mors 140 traverse l'ouverture du rail 105.

L'ouverture traversante 135 de la mâchoire 125 traverse le corps de guidage 130 dans l'axe du rail 105 et est ouverte sur la face du corps de guidage 130 opposée à la face comportant le mors 140. Lorsque le rail 105 comporte des rivets, ces rivets de fixation du rail 105 correspondent à l'ouverture du corps de guidage 130 ouverte sur la face opposée à la face comportant le mors 140. Ainsi, même s'il n'y a pas de rainure dans le rail 105, les rivets n'empêchent pas le corps de guidage 130 de circuler. La tête de vis 145 ou l'écrou 150 est inséré dans l'ouverture traversante par la face ouverte du corps de guidage 130 opposée à la face comportant le mors 140. Une fois dans le rail 105, la tête de vis 145 ou l'écrou 150 ne peuvent plus ressortir.

L'ouverture traversante présente des dimensions telles que la tige de la vis 110 peut traverser l'ouverture 135, mais la tête de vis 145 est bloquée par les dimensions de l'ouverture 135.

Préférentiellement, l'ouverture 135 de la mâchoire 125 présente une forme au moins partiellement ovoïde permettant la rotation de la tête de vis 145 ou de l'écrou 150 lors des arcboutements. L'ouverture 135 présente donc une forme ovoïde ouverte selon l'axe 120 de la vis 115 vers chaque face du corps de guidage 130 dans l'axe du rail 105 pour laisser passer la tige de la vis 115. La forme ovoïde est telle que l'ouverture présente une forme de O autour de la tête de vis 145 ou de l'écrou 150 pour laisser un jeu autour de la tête de vis 145 ou de l'écrou 150. Le jeu permet de préserver la tête de vis 145 et l'écrou 150 lors de l'arcboutement du corps de guidage 130.

La tête de la vis 145 est insérée dans l'ouverture traversante 135a d'une mâchoire 125a. L'autre mâchoire 125b comporte un écrou 150 dans son ouverture traversante 135b, bloqué en rotation autour du premier axe 120.

Dans des modes de réalisation préférentiels, une rondelle 165 est mise en place sur la vis 115 proche de la tête de vis 145, la tête de vis 145 et la rondelle 165 étant emmanchées dans l'ouverture 135a d'une mâchoire 125a. La tête de vis 145 et la rondelle 165 sont emmanchées dans la partie ovoïde de l'ouverture 135a par la face du corps de guidage 130a opposée à la face comportant la jonction au mors 140a.

Préférentiellement, une fois la tête de vis 145 emmanchée dans le corps de guidage 130a, l'écrou 150 est placé sur la tige de la vis 115 ou la tige filetée 175 et est emmanché dans le corps de guidage 130b. L'écrou 150 est emmanché dans la partie ovoïde de l'ouverture 135b par la face du corps de guidage 130b opposée à la face comportant la jonction au mors 140b.

Les mâchoires 125a et 125b sont donc liées par la vis 115, et dans des modes de réalisation, la tige filetée 175. Le vissage de la vis 115 entraine le resserrage des mâchoires, 125a et 125b, l'une vers l'autre.

L'ensemble de mâchoires ainsi constitué est placé dans le rail 105, seuls les mors, 140a et 140b, dépassent du rail 105.

Le vissage de la vis 115 dans l'écrou 150 rapproche les mâchoires, 125a et 125b, par une translation dans le rail 105 du corps de guidage, 130a et 130b, la mise en butée du mors, 140a et 140b, de chaque mâchoire, 125a et 125b, sur la barre 20 entraîne une rotation du corps de guidage, 130a et 130b, provoquant le coincement selon un arcboutement du corps de guidage, 130a et 130b, sur au moins deux côtés adjacents du rail 105.

Dans des modes de réalisation, le corps de guidage 130 de chaque mâchoire 125 comporte une rainure 170 sur une surface opposée aux mors 140. La rainure 170 est dans l'axe du rail 105 une fois la mâchoire 125 insérée dans le rail. La rainure correspond à un emplacement pour des rivets sur le rail 105 pour fixer un accessoire de portage, tel une tente de toit, un coffre de toit ou une galerie, par exemple. Les rivets placés en regard de la rainure ne sont donc ainsi pas abîmés lors du déplacement de la mâchoire 125.

Préférentiellement, l'ouverture 135a comportant la tête de vis 145 présente une forme conique liant l'ouverture 135a à un bord du corps de guidage 130a. La forme conique lie l'ouverture 135a au bord du corps de guidage 130a perpendiculaire à l'axe du rail 105 qui n'est pas traversé par la tige de la vis 115. Ces modes de réalisation permettent de guider l'outil pour visser la vis 115 directement vers la tête de vis 145.

Le mors 140 présente une section sensiblement parallélépipédique à la jonction avec le corps de guidage 130. La dimension dans l'axe du rail 105 est égale à celle du corps de guidage 130. La dimension dans l'axe perpendiculaire au rail 105 dans la face du rail 105 comportant l'ouverture et inférieure à la dimension de l'ouverture. Le mors 140 est préférentiellement positionné en contact avec l'une des faces de l'ouverture du rail 105.

Le mors 140 est désaxé par rapport au plan de symétrie 110 du rail 105. Ainsi, lorsque le mors 140a est mis face au mors 140b, les mors, 140a et 140b sont désaxés par rapport au plan de symétrie 110 du rail 105 chacun d'un côté du plan 110, en serrant la barre 20 en cisaille.

La section du mors 140 est sensiblement parallélépipédique depuis le corps de guidage 130 à l'extrémité du mors 140. La longueur du mors depuis le corps de guidage 130 à l'extrémité du mors 140 est configurée pour être supérieure aux dimensions de la barre 20.

Le mors 140 peut s'évaser à son extrémité pour créer une butée de blocage de la barre 20 contre le mors 140 en cas de chocs.

Dans des modes de réalisation préférentiels, chaque mors 140 forme un angle aigu avec le premier axe 120, les mors, 140a et 140b, sont inclinés l'un vers l'autre.

Le mors 140 est incliné selon un axe 155 formant un angle aigu avec l'axe 120 par projection dans le plan de symétrie du rail 105. L'inclinaison des mors, 140a et 140b, l'un vers l'autre permet d'enserrer la barre pour éviter sa libération en cas de vibrations.

Dans des modes de réalisation, le mors 140 présente un épaulement 160 d'appui du mors 140 contre la barre 20 après arcboutement.

L'épaulement 160 a une forme sensiblement en arc de cercle de la base du mors 140 en contact avec le corps de guidage 130 à l'extrémité du mors 140. L'épaulement 160 permet une économie de matière et un maintien constant du contact du mors 140 avec la barre 20 après arcboutement de la mâchoire 125. L'épaulement est situé sur la face du mors 140 éloignée du bord de l'ouverture du rail 105.

Dans des modes de réalisation, les mors 140 des mâchoires 125 sont recouverts d'un matériau élastique dont la compression permet d'assurer un effort constant sur les corps de guidages 130 et donc de maintenir l'arc-boutement, en cas de fortes vibrations, par exemple.

Afin de faciliter la fabrication du dispositif 10, les mâchoires, 125a et 125b, sont identiques, seul leur positionnement dans le dispositif en relation avec les éléments du dispositif 10 décrits ci-dessus, différentie les mâchoires, 125a et 125b.

Préférentiellement, les mâchoires 125 sont en aluminium. Le coefficient de frottement entre le rail 105 et les corps de guidage, 130a et 130b, est supérieur ou égal à 0,25 ce qui correspond aux surfaces métalliques brutes sèches des pièces.

Le corps de guidage 130 de chaque mâchoire 125 présente un jeu par rapport aux dimensions de la section du rail 105 selon cette section afin de pouvoir créer un arcboutement.

Le rail 105 possède une ouverture sur une extrémité longitudinale du rail 105 permettant de sortir ou insérer un ou plusieurs ensembles de mâchoires dans le dispositif 10. Les ensembles de mâchoires sont facilement interchangeables sans outils, en faisant glisser à la main l'ensemble jusqu'à l'ouverture à l'extrémité longitudinale du rail 105.

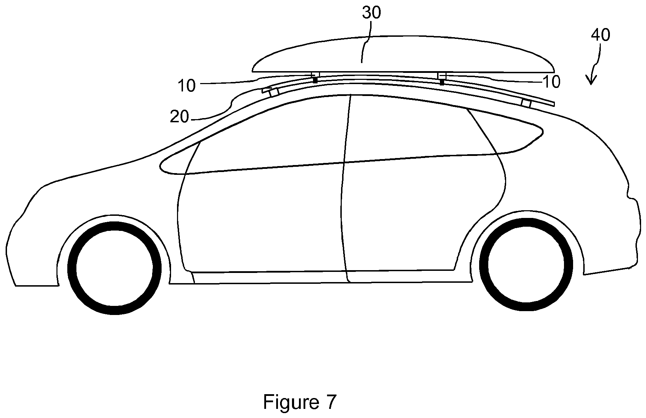

La figure 7 représente un véhicule 40 comportant des barres 20 de toit sur lesquelles sont montés un accessoire de portage, tel un coffre de toit, une tente de toit 30, un porte-vélo ou une galerie.

Le véhicule 40 présente deux barres de toit selon la direction de déplacement du véhicule 40.

La tente de toit 30 est fixée par des rivets à deux rails 105. Les rails 105 sont montés perpendiculairement aux barres 20 de toit. Chaque rail 105 comporte deux ensembles de mâchoires du dispositif 10 objet de la présente invention.

On appelle ensemble mâchoires, l'ensemble des éléments du dispositif 10 à l'exception du rail 105.

Les ensembles de mâchoires de chaque rail 105 sont serrés et mis en arcboutement sur une barre 20. La tente de toit 30 est donc maintenue fermement en position par quatre ensembles de mâchoires.

Le dispositif 10 est mis en œuvre pour la fixation rapide, simple, et sûre d'accessoires de portage pour véhicule automobile tel un coffre de toit, une tente de toit, un porte-vélo ou une galerie, sur les barres de toits de véhicules.

Le dispositif 10 est positionné tel que les mâchoires, 125a et 125b, sont positionnées de part et d'autre de la barre 20, le rail 105 étant en appui sur la barre 20.

L'outil correspondant à la tête de vis 145 est insérée dans le corps de guidage 130a de la mâchoire 125a, et est guidée par la partie en forme de cône de l'ouverture 135a vers la tête de vis 145. Une fois l'emboitement entre l'outil et la vis 115 effectué, l'utilisateur peut visser la vis 115.

La rotation de la vis 115 entraîne le rapprochement des mâchoires, 125a et 125b, jusqu'à l'arrivée en butée des mors, 140a et 140b, contre la barre 20. En continuant à visser, les corps de guidage, 130a et 130b, se tournent et se bloquent par arcboutement contre l'ensemble des surfaces de la section du rail 105. L'arcboutement des corps de guidage, 130a et 130b, dans le rail 105 permet aux mâchoires, 125a et 125b, de rester bloquées en cas de rupture de la vis 115, de la tige filetée 175 et/ou du frein de filet entre le manchon 180, la vis 115 et la tige filetée 175, assurant ainsi la sécurité de l'arrimage du chargement sur les barres de toit 20.

Cette solidarisation de tous les degrés de liberté permet de transmettre des efforts compatibles avec l'usage envisagé dans toutes les directions et des couples dans toutes les directions.

Pour déverrouiller le dispositif 10, l'utilisateur dévisse la vis 115 et libère les corps de guidage 130 de l'arcboutement. Les corps de guidage 130 s'éloignent l'un de l'autre jusqu'à ce que l'écart entre les mors 140 soit suffisamment grand pour faire passer la barre 20.

## Revendications

1. Dispositif (10) de fixation sur barres (20) comportant :
- un rail (105) à section globalement rectangulaire en forme de C présentant un plan de symétrie (110),
- une vis (115) définissant un premier axe (120) parallèle à l'axe du rail et
- au moins deux mâchoires (125a, 125b), chaque mâchoire comportant :
- une partie corps de guidage (130a, 130b) circulant dans le rail avec un jeu et comportant une ouverture traversante (135a, 135b) et
- une partie mors (140a, 140b) extérieure au rail ;
le dispositif étant **caractérisé en ce que** :
- la tête de la vis (145) est insérée dans l'ouverture traversante (135a) d'une mâchoire (125a),
- une autre mâchoire (125b) comporte un écrou (150) dans son ouverture traversante (135b), bloqué en rotation autour du premier axe,
- les mors de chaque mâchoire étant désaxés par rapport au plan de symétrie du rail, chacun d'un côté du plan, en serrant la barre en cisaille,
- le vissage de la vis dans l'écrou rapprochant les mâchoires par une translation dans le rail du corps de guidage, la mise en butée du mors de chaque mâchoire sur la barre entraîne une rotation du corps de guidage provoquant le coincement selon un arcboutement du corps de guidage sur au moins deux côtés adjacents du rail.

2. Dispositif (10) selon la revendication 1, dans lequel, chaque mors (140a, 140b) forme un angle aigu avec le premier axe (120), les mors sont inclinés l'un vers l'autre.

3. Dispositif (10) selon l'une des revendications 1 ou 2, dans lequel, chaque mors (140a, 140b) présente un épaulement (160a, 160b) d'appui du mors contre la barre (20) après arcboutement.

4. Dispositif (10) selon l'une des revendications 1 à 3, dans lequel l'ouverture (135a, 135b) de chaque mâchoire (125a, 125b) présente une forme au moins partiellement ovoïde permettant la rotation de la tête de vis (145) ou de l'écrou (150) lors des arcboutements.

5. Dispositif (10) selon l'une des revendications 1 à 4, dans lequel une rondelle (165) est mise en place sur la vis (115) proche de la tête de vis (145), la tête de vis et la rondelle étant emmanchées dans l'ouverture (135a) d'une mâchoire (125a).

6. Dispositif (10) selon l'une des revendications 1 à 5, dans lequel le corps de guidage (130a, 130b) de chaque mâchoire (125a, 125b) comporte une rainure (170a, 170b) sur une surface opposée aux mors (140a, 140b).

7. Dispositif (10) selon l'une des revendications 1 à 6, dans lequel la vis (115) est reliée à une tige filetée (175) par un manchon (180) comportant un frein de filet pour coller le manchon à la vis et à la tige filetée.

8. Dispositif (10) selon l'une des revendications 1 à 7, dans lequel l'ouverture (135a) comportant la tête de vis (145) présente une forme conique (185) liant l'ouverture à un bord du corps de guidage (130a).

9. Dispositif (10) selon l'une des revendications 1 à 8, dans lequel la tête de la vis (145) présente une forme asymétrique.

10. Accessoire de portage (30) pour un véhicule (40) comportant des barres de toit (20) comportant au moins un dispositif (10) selon l'une des revendications 1 à 9.

11. Tente de toit (30) pour véhicule (40) comportant des barres de toit (20), la tente comportant au moins un dispositif (10) selon l'une des revendications 1 à 9.

## Patentansprüche

1. Befestigungsvorrichtung (10) auf Stangen (20), umfassend:
- eine Schiene (105) mit insgesamt rechteckigem Querschnitt in C-Form, die eine Symmetrie-Ebene (110) aufweist,
- eine Schraube (115), die eine erste Achse (120) parallel zur Achse der Schiene definiert, und
- wenigstens zwei Klemmbacken (125a, 125b), wobei jede Klemmbacke umfasst:
- einen Führungskörperteil (130a, 130b), der in der Schiene mit einem Spiel verkehrt und eine durchquerende Öffnung (135a, 135b) umfasst, und
- einen Spannbackeneinsatz (140a, 140b) außen an der Schiene;
wobei die Vorrichtung **dadurch gekennzeichnet ist, dass**:
- der Kopf der Schraube (145) in die durchquerende Öffnung (135a) einer Klemmbacke (125a) eingeführt ist,
- eine andere Klemmbacke (125b) in ihrer durchquerenden Öffnung (135b) eine Mutter (150) umfasst, die in Drehung um die erste Achse festgestellt ist,
- wenn die Spannbackeneinsätze jeder Spannbacke in Bezug auf die Symmetrie-Ebene der Schiene, jede auf einer Seite der Ebene, axial verzogen ist, wenn die Stange scherenförmig eingespannt ist,
- wenn das Verschrauben der Schraube in der Mutter, die die Klemmbacken durch eine Translation in der Schiene des Führungskörpers annähert, das Bringen des Spannbackeneinsatzes jeder Spannbacke zum Anliegen auf der Stange eine Drehung des Führungskörpers nach sich zieht und das Einklemmen gemäß einem Totpunkt des Führungskörpers auf wenigstens zwei anliegenden Seiten der Schiene hervorruft.

2. Vorrichtung (10) gemäß Anspruch 1, bei der jeder Spannbackeneinsatz (140a, 140b) mit der ersten Achse (120) einen spitzen Winkel bildet, die Spannbackeneinsätze sind zueinander geneigt.

3. Vorrichtung (10) gemäß einem der Ansprüche 1 oder 2, bei der jeder Spannbackeneinsatz (140a, 140b) einen Stützabsatz (160a, 160b) des Spannbackeneinsatzes gegen die Stange (20) nach dem Totpunkt aufweist.

4. Vorrichtung (10) gemäß einem der Ansprüche 1 bis 3, bei der die Öffnung (135a, 135b) jeder Spannbacke (125a, 125b) eine Form aufweist, die wenigstens teilweise eiförmig ist und die Drehung des Schraubenkopfes (145) oder der Mutter (150) bei den Totpunkten ermöglicht.

5. Vorrichtung (10) gemäß einem der Ansprüche 1 bis 4, bei der eine Scheibe (165) auf der Schraube (115) in der Nähe des Schraubenkopfes (145) platziert ist, wobei der Schraubenkopf und die Scheibe in der Öffnung (135a) einer Spannbacke (125a) eingepasst sind.

6. Vorrichtung (10) gemäß einem der Ansprüche 1 bis 5, bei der der Führungskörper (130a, 130b) jeder Spannbacke (125a, 125b) eine Rille (170a, 170b) auf einer den Spannbackeneinsätzen (140a, 140b) entgegengesetzten Oberfläche umfasst.

7. Vorrichtung (10) gemäß einem der Ansprüche 1 bis 6, bei der die Schraube (115) mit einem Gewindestift (175) durch einen Stutzen (180) verbunden ist, der eine Schraubensicherung zum Verkleben des Stutzens an der Schraube und an dem Gewindestift umfasst.

8. Vorrichtung (10) gemäß einem der Ansprüche 1 bis 7, bei der die Öffnung (135a), die den Schraubenkopf (145) umfasst, eine konische Form (185) aufweist, die die Öffnung mit einem Rand des Führungskörpers (130a) verbindet.

9. Vorrichtung (10) gemäß einem der Ansprüche 1 bis 8, bei der der Kopf der Schraube (145) eine asymmetrische Form aufweist.

10. Trägerzubehör (30) für ein Fahrzeug (40), umfassend Dachstangen (20), die wenigstens eine Vorrichtung (10) gemäß einem der Ansprüche 1 bis 9 umfassen.

11. Dachzelt (30) für ein Fahrzeug (40), umfassend Dachstangen (20), die wenigstens eine Vorrichtung (10) gemäß einem der Ansprüche 1 bis 9 umfassen.

## Claims

1. Device (10) for attachment on roof bars (20) including:
- a C-shaped rail (105) with an overall rectangular section having a plane of symmetry (110);
- a screw (115) defining a first axis (120) parallel to the axis of the rail; and
- at least two jaws (125a, 125b), each jaw including:
- a guiding body portion (130a, 130b), running in the rail with a play and including a through-opening (135a, 135b), and
- a clamp portion (140a, 140b) outside the rail;
the device being **characterized in that**:
- the head of the screw (145) is inserted into the through-opening (135a) of one jaw (125a);
- another jaw (125b) includes a nut (150) in its through-opening (135b), rotatably locked around the first axis;
- the clamps of each jaw are off-center relative to the plane of symmetry of the rail, each on one side of the plane, clamping the bar by shearing;
- the screwing of the screw into the nut translates the jaws towards one another in the rail of the guiding body, and the engagement of the clamps of each jaw with the bar rotates the guiding body, thus causing same to stick by self-locking on at least two adjacent sides of the rail.

2. Device (10) according to claim 1 wherein each clamp (140a, 140b) forms an acute angle with the first axis (120), and the clamps are inclined towards each other.

3. Device (10) according to one of claims 1 or 2, wherein each clamp (140a, 140b) has a shoulder (160a, 160b) for abutting the clamp against the bar (20) after self-locking.

4. Device (10) according to one of claims 1 to 3, wherein the opening (135a, 135b) of each jaw (125a, 125b) is at least partially ovoid in shape, allowing the screw head (145) or nut (150) to rotate during self-locking.

5. Device (10) according to one of claims 1 to 4, wherein a washer (165) is placed on the screw (115) near the screw head (145), the screw head and washer being fitted in the opening (135a) of a jaw (125a).

6. Device (10) according to one of claims 1 to 5, wherein the guiding body (130a, 130b) of each jaw (125a, 125b) comprises a groove (170a, 170b) on a surface opposite the clamps (140a, 140b).

7. Device (10) according to one of claims 1 to 6, wherein the screw (115) is connected to a threaded rod (175) by a sleeve (180) comprising a thread lock to stick the sleeve to the screw and the threaded rod.

8. Device (10) according to one of claims 1 to 7, wherein the opening (135a) including the screw head (145) has a conical shape (185) connecting the opening to an edge of the guiding body (130a).

9. Device (10) according to one of claims 1 to 8, wherein the screw head (145) has an asymmetric shape.

10. Supporting accessory (30) for a vehicle (40) including roof bars (20) comprising at least one device (10) according to one of claims 1 to 9.

11. Roof tent (30) for a vehicle (40) including roof bars (20), the tent comprising at least one device (10) according to one of claims 1 to 9.
